# EUROPEAN PATENT APPLICATION

(11) **EP 4 811 239 A1**
(43) Date of publication of application: **23.09.2026**
(21) Application number: 25164622.0
(22) Date of filing: 19.03.2025
(51) Int. Cl.: G06Q 10/08, G06V 10/00, G06V 10/74, G06V 10/764, H04N 23/80, G06N 20/00, G05B 19/418

(54) **CLASSIFYING OBJECTS ACCORDING TO TRANSPORT DESTINATION USING ARTIFICIAL INTELLIGENCE**

(71) Applicant: Ricoh Company, Ltd., Tokyo 143-8555 (JP)
(72) Inventor: ZWICK, Tiago, 40472 Düsseldorf (DE)
(74) Representative: SSM Sandmair

(57) **Abstract**

Disclosed is a computer-implemented method of determining a transport destination of an object, the method comprising the following steps:
a) image data is acquired from a plurality of image data sources which describes images of the object taken with different ones of the image data sources;
b) object identifier data is acquired which describes an identifier of the object to be assigned to pieces of the image data acquired from different ones of the plurality of image data sources;
c) image association data is determined based on the image data and the object identifier data, wherein the image association data describes an association between the pieces of the image data and the identifier;
d) image classification data is determined based on the image data, wherein the image classification data is determined by inputting the image data and the image association data into a recognition service trained to classify the images according to the object which the images of the object describe and according to a transport destination of the object which the images of the object describe; and
e) notification data is determined based on the image classification data, wherein the notification data describes a notification indicating a transport destination to which the object shall be transported.

## Description

### FIELD OF THE INVENTION

This invention relates to a method and a system that automatically perform classification of a single object using multiple visual data sources.

### TECHNICAL BACKGROUND

There is a demand to classify objects based on specific criteria. For example, objects that are transported often need to be classified according to the size or type. Additionally, fresh produce must be classified based on their appearance.

Computer vision solutions available on the market are architected to provide outcome based on an incoming image. The available solutions rely on external systems in order to evaluate the predictions or to generate and initiate process workflows with the outcome. This makes system integration and maintainability difficult.

For example, in US 2020/117873 A1, reading QR codes with multiple cameras is disclosed. According to that document, when classifying based on information that cannot be represented by two-dimensional barcodes or QR codes, human sorting was required.

The present invention has the object of providing improved means for classifying objects.

Aspects of the present invention, examples and exemplary steps and their embodiments are disclosed in the following. Different exemplary features of the invention can be combined in accordance with the invention wherever technically expedient and feasible.

### GENERAL DESCRIPTION OF THE INVENTION

In this section, a description of the general features of the present invention is given for example by referring to possible embodiments of the invention.

In general, the invention reaches the aforementioned object by providing, in a first aspect, a computer-implemented method of determining a transport destination of an object. The method according to the first aspect comprises executing, on at least one processor of at least one computer (for example at least one computer being part of a production line control system), the following exemplary steps which are executed by the at least one processor.

In a (for example first) exemplary step, image data is acquired from a plurality of image data sources which describes images of the object taken with different ones of the image data sources. The image data sources are for example cameras or data files such as regular cameras, wide-angle cameras, infrared cameras, LiDAR sensors, drone footage, image files, video files, medical images, microscope images, as well as satellite images. The image data sources may be all of the same type, for example of the same one of the aforementioned types, of image data sources or of different types, for example different ones of the aforementioned types.

In a (for example second) exemplary step, object identifier data is acquired which describes an identifier of the object to be assigned to pieces of the image data acquired from different ones of the plurality of image data sources. The identifier is for example read from metadata of the image data and stored in and acquired, i.e. retrieved, from a look-up table. The identifier describes the type of the object and for example another characteristic of the object such as its colour, state of cleanliness and/or an error which the object has.

In a (for example third) exemplary step, image association data is determined based on the image data and the object identifier data, wherein the image association data describes an association between the pieces of the image data and the identifier. The image association data is determined by assigning the identifier to the image data. The assignment is performed for example by an appropriately configured trainable algorithm which is for example a learning algorithm such as an artificial intelligence algorithm, for example a machine learning algorithm, specifically a neural network such as a convolutional neural network. This trainable algorithm has been trained for example on images showing different objects to be identified and identifying information defining, i.e. identifying the object, shown in each of the images. The identifying information has been determined for example manually by a user. The identifying information describes the type of the object and for example another characteristic of the object such as its colour, state of cleanliness and/or an error which the object has.

In a (for example fourth) exemplary step, image classification data is determined based on the image data, wherein the image classification data is determined by inputting the image data and the image association data into a recognition service trained to classify the images according to the object which the images of the object describe and according to a transport destination of the object which the images of the object describe. For example, the recognition service has been trained on known associations between objects recognized in images and a transport destination to which the respective object shall be transported. The recognition service is for example a trainable algorithm which is for example a learning algorithm such as an artificial intelligence algorithm, for example a machine learning algorithm, specifically a neural network such as a convolutional neural network. The recognition has been trained for example on 2,000 images of meat, each tagged (i.e. labelled) with their respective class ranks (when classifying images as showing meat as the object) and a destination to which the object shall be transported. The tagging (i.e. labelling) has been performed for example manually by a user.

In a (for example fifth) exemplary step, notification data is determined based on the image classification data, wherein the notification data describes a notification indicating a transport destination to which the object shall be transported. For example, the notification data includes control data for controlling a transport device to transport the object to the destination to which it shall be transported. In this example, the notification is a corresponding control signal, i.e. command to the transport device. Alternatively or additionally, the notification data includes control data for controlling a display device, for example a display device of a handheld device, to display the notification.

In an example of the method according to the first aspect, workflow data is determined which describes a workflow to be triggered, wherein the workflow includes sending the notification indicating the transport destination.

In an example of the method according to the first aspect, facility error data is determined which describes an error of a facility comprising the transport destination, i.e. of a facility in which the transport destination is located. Based on the facility error data, production control data is determined which describes at least one command for stopping a production line, for example for inspection of the production line. The command is embodied for example by a control signal to be issued to the production line, for example a transport device for transporting object along the production line.

In an example of the method according to the first aspect, the recognition service is trained to classify the images according to a cleanliness state of the object. In this example, the method according to the first aspect comprises determining, based on the image classification data, production control data describing at least one command for stopping a production line, for example for clean-up of the production line.

In an example of the method according to the first aspect, confidence level data is determined based on the image classification data. The confidence level data describes a confidence level of the integrated result. Furthermore, confidence level threshold data is acquired which describes a first threshold of the confidence level of the integrated result. The notification data is the determined if, for example only if, the confidence level of the integrated result is greater than or equal to a first threshold.

In an example of the method according to the first aspect, confidence level data is determined based on the image classification data. The confidence level data describes a confidence level of the integrated result. Furthermore, confidence level threshold data is acquired which describes a first threshold of the confidence level of the integrated result. In this example, training control data describing at least one command for using a piece of the image data for training the recognition service if, for example only if, the confidence level of the integrated result is greater than a second threshold being greater than the first threshold.

In an example of the method according to the first aspect, the recognition service comprises a plurality of recognition services, for example a plurality of different recognition services, wherein each of the plurality of recognition services is assigned to only one of the image data sources, and wherein the image classification describes an integration of classifications of images describing the same object received from each of the plurality of recognition services.

In an example of the method according to the first aspect, masked image data is determined which describes images of the object with a masking of a representation of a human face described by the images of the object. For example, the image data inputted into the recognition service is the masked image data.

In a second aspect, the invention is directed to a computer program comprising instructions which, when the program is executed by at least one computer, causes the at least one computer to carry out method according to the first aspect. The invention may alternatively or additionally relate to a (physical, for example electrical, for example technically generated) signal wave, for example a digital signal wave, such as an electromagnetic carrier wave carrying information which represents the program, for example the aforementioned program, which for example comprises code means which are adapted to perform any or all of the steps of the method according to the first aspect. The signal wave is in one example a data carrier signal carrying the aforementioned computer program. A computer program stored on a disc is a data file, and when the file is read out and transmitted it becomes a data stream for example in the form of a (physical, for example electrical, for example technically generated) signal. The signal can be implemented as the signal wave, for example as the electromagnetic carrier wave which is described herein. For example, the signal, for example the signal wave is constituted to be transmitted via a computer network, for example LAN, WLAN, WAN, mobile network, for example the internet. For example, the signal, for example the signal wave, is constituted to be transmitted by optic or acoustic data transmission. The invention according to the second aspect therefore may alternatively or additionally relate to a data stream representative of the aforementioned program, i.e. comprising or carrying the program.

In a third aspect, the invention is directed to a computer-readable storage medium on which the program according to the second aspect is stored. The program storage medium is for example non-transitory.

In a fourth aspect, the invention is directed to at least one computer (for example, a computer), comprising at least one processor (for example, a processor) and for example a memory, wherein the program according to the second aspect is executed by the processor or the processor is configured to execute the program according to the second aspect, or wherein the at least one computer comprises the computer-readable storage medium according to the third aspect.

In a fifth aspect, the invention is directed to a system, for example a production line control system, for determining a transport destination of an object, comprising the computer according to the fourth aspect, wherein the computer is server.

### DEFINITIONS

In this section, definitions for specific terminology used in this disclosure are offered which also form part of the present disclosure.

### Computer-implemented method

The method in accordance with the invention is for example a computer-implemented method. For example, all the steps or merely some of the steps (i.e. less than the total number of steps) of the method in accordance with the invention can be executed by a computer (for example, at least one computer). An embodiment of the computer implemented method is a use of the computer for performing a data processing method. An embodiment of the computer implemented method is a method concerning the operation of the computer such that the computer is operated to perform one, more or all steps of the method.

The computer for example comprises at least one processor and for example at least one memory in order to (technically) process the data, for example electronically and/or optically. The processor being for example made of a substance or composition which is a semiconductor, for example at least partly n- and/or p-doped semiconductor, for example at least one of II-, III-, IV-, V-, VI-semiconductor material, for example (doped) silicon and/or gallium arsenide. The calculating or determining steps described are for example performed by a computer. Determining steps or calculating steps are for example steps of determining data within the framework of the technical method, for example within the framework of a program. A computer is for example any kind of data processing device, for example electronic data processing device. A computer can be a device which is generally thought of as such, for example desktop PCs, notebooks, netbooks, etc., but can also be any programmable apparatus, such as for example a mobile phone or an embedded processor. A computer can for example comprise a system (network) of "sub-computers", wherein each sub-computer represents a computer in its own right. The term "computer" includes a cloud computer, for example a cloud server. The term computer includes a server resource. The term "cloud computer" includes a cloud computer system which for example comprises a system of at least one cloud computer and for example a plurality of operatively interconnected cloud computers such as a server farm. Such a cloud computer is preferably connected to a wide area network such as the world wide web (WWW) and located in a so-called cloud of computers which are all connected to the world wide web. Such an infrastructure is used for "cloud computing", which describes computation, software, data access and storage services which do not require the end user to know the physical location and/or configuration of the computer delivering a specific service. For example, the term "cloud" is used in this respect as a metaphor for the Internet (world wide web). For example, the cloud provides computing infrastructure as a service (IaaS). The cloud computer can function as a virtual host for an operating system and/or data processing application which is used to execute the method of the invention. The cloud computer is for example an elastic compute cloud (EC2) as provided by Amazon Web Services^{™}. A computer for example comprises interfaces in order to receive or output data and/or perform an analogue-to-digital conversion. The data are for example data which represent physical properties and/or which are generated from technical signals. The technical signals for example represent the data received or outputted by the computer. The computer is preferably operatively coupled to a display device which allows information outputted by the computer to be displayed, for example to a user. One example of a display device is a virtual reality device or an augmented reality device (also referred to as virtual reality glasses or augmented reality glasses). An augmented reality device or a virtual reality device can be used both to input information into the computer by user interaction and to display information outputted by the computer. Another example of a display device would be a standard computer monitor comprising for example a liquid crystal display operatively coupled to the computer for receiving display control data from the computer for generating signals used to display image information content on the display device. The monitor may also be the monitor of a portable, for example handheld, device such as a smart phone or personal digital assistant or digital media player.

The invention also relates to a computer program comprising instructions which, when on the program is executed by a computer, cause the computer to carry out the method or methods, for example, the steps of the method or methods, described herein and/or to a computer-readable storage medium (for example, a non-transitory computer-readable storage medium) on which the program is stored and/or to a computer comprising said program storage medium and/or to a (physical, for example electrical, for example technically generated) signal wave, for example a digital signal wave, such as an electromagnetic carrier wave carrying information which represents the program, for example the aforementioned program, which for example comprises code means which are adapted to perform any or all of the method steps described herein. The signal wave is in one example a data carrier signal carrying the aforementioned computer program. The invention also relates to a computer comprising at least one processor and/or the aforementioned computer-readable storage medium and for example a memory, wherein the program is executed by the processor.

Within the framework of the invention, computer program elements can be embodied by hardware and/or software (this includes firmware, resident software, micro-code, etc.). Within the framework of the invention, computer program elements can take the form of a computer program product which can be embodied by a computer-usable, for example computer-readable data storage medium comprising computer-usable, for example computer-readable program instructions, "code" or a "computer program" embodied in said data storage medium for use on or in connection with the instruction-executing system. Such a system can be a computer; a computer can be a data processing device comprising means for executing the computer program elements and/or the program in accordance with the invention, for example a data processing device comprising a digital processor (central processing unit or CPU) which executes the computer program elements, and optionally a volatile memory (for example a random access memory or RAM) for storing data used for and/or produced by executing the computer program elements. Within the framework of the present invention, a computer-usable, for example computer-readable data storage medium can be any data storage medium which can include, store, communicate, propagate or transport the program for use on or in connection with the instruction-executing system, apparatus or device. The computer-usable, for example computer-readable data storage medium can for example be, but is not limited to, an electronic, magnetic, optical, electromagnetic, infrared or semiconductor system, apparatus or device or a medium of propagation such as for example the Internet. The computer-usable or computer-readable data storage medium could even for example be paper or another suitable medium onto which the program is printed, since the program could be electronically captured, for example by optically scanning the paper or other suitable medium, and then compiled, interpreted or otherwise processed in a suitable manner. The data storage medium is preferably a non-volatile data storage medium. The computer program product and any software and/or hardware described here form the various means for performing the functions of the invention in the example embodiments. The computer and/or data processing device can for example include a guidance information device which includes means for outputting guidance information. The guidance information can be outputted, for example to a user, visually by a visual indicating means (for example, a monitor and/or a lamp) and/or acoustically by an acoustic indicating means (for example, a loudspeaker and/or a digital speech output device) and/or tactilely by a tactile indicating means (for example, a vibrating element or a vibration element incorporated into an instrument). For the purpose of this document, a computer is a technical computer which for example comprises technical, for example tangible components, for example mechanical and/or electronic components. Any device mentioned as such in this document is a technical and for example tangible device.

### Acquiring data

The expression "acquiring data" for example encompasses (within the framework of a computer implemented method) the scenario in which the data are determined by the computer implemented method or program. Determining data for example encompasses measuring physical quantities and transforming the measured values into data, for example digital data, and/or computing (and e.g. outputting) the data by means of a computer and for example within the framework of the method in accordance with the invention. A step of "determining" as described herein for example comprises or consists of issuing a command to perform the determination described herein. For example, the step comprises or consists of issuing a command to cause a computer, for example a remote computer, for example a remote server, for example in the cloud, to perform the determination. Alternatively or additionally, a step of "determination" as described herein for example comprises or consists of receiving the data resulting from the determination described herein, for example receiving the resulting data from the remote computer, for example from that remote computer which has been caused to perform the determination. The meaning of "acquiring data" also for example encompasses the scenario in which the data are received or retrieved by (e.g. input to) the computer implemented method or program, for example from another program, a previous method step or a data storage medium, for example for further processing by the computer implemented method or program. Generation of the data to be acquired may but need not be part of the method in accordance with the invention. The expression "acquiring data" can therefore also for example mean waiting to receive data and/or receiving the data. The received data can for example be inputted via an interface. The expression "acquiring data" can also mean that the computer implemented method or program performs steps in order to (actively) receive or retrieve the data from a data source, for instance a data storage medium (such as for example a ROM, RAM, database, hard drive, etc.), or via the interface (for instance, from another computer or a network). The data acquired by the disclosed method or device, respectively, may be acquired from a database located in a data storage device which is operably to a computer for data transfer between the database and the computer, for example from the database to the computer. The computer acquires the data for use as an input for steps of determining data. The determined data can be output again to the same or another database to be stored for later use. The database or database used for implementing the disclosed method can be located on network data storage device or a network server (for example, a cloud data storage device or a cloud server) or a local data storage device (such as a mass storage device operably connected to at least one computer executing the disclosed method). The data can be made "ready for use" by performing an additional step before the acquiring step. In accordance with this additional step, the data are generated in order to be acquired. The data are for example detected or captured (for example by an analytical device). Alternatively or additionally, the data are inputted in accordance with the additional step, for instance via interfaces. The data generated can for example be inputted (for instance into the computer). In accordance with the additional step (which precedes the acquiring step), the data can also be provided by performing the additional step of storing the data in a data storage medium (such as for example a ROM, RAM, CD and/or hard drive), such that they are ready for use within the framework of the method or program in accordance with the invention. The step of "acquiring data" can therefore also involve commanding a device to obtain and/or provide the data to be acquired. In particular, the acquiring step does not involve an invasive step which would represent a substantial physical interference with the body, requiring professional medical expertise to be carried out and entailing a substantial health risk even when carried out with the required professional care and expertise. In particular, the step of acquiring data, for example determining data, does not involve a surgical step and in particular does not involve a step of treating a human or animal body using surgery or therapy. In order to distinguish the different data used by the present method, the data are denoted (i.e. referred to) as "XY data" and the like and are defined in terms of the information which they describe, which is then preferably referred to as "XY information" and the like.

### BRIEF DESCRIPTION OF THE DRAWINGS

In the following, the invention is described with reference to the appended figures which give background explanations and represent specific embodiments of the invention.

The scope of the invention is however not limited to the specific features disclosed in the context of the figures, wherein
- Fig. 1: shows an embodiment of a system in accordance with the fifth aspect, specifically the method according to the first aspect;
- Fig. 2: is a flowchart that explains an example of the method according to the first aspect;
- Fig. 3: is a flow chart explaining an example of the flow chart of Fig: 2;
- Fig. 4: shows a modification of the flow chart shown in Fig. 3;
- Fig. 5: is a diagram that explains an example of data linkage;
- Fig. 6: is an example of the hardware configuration that constitutes each of the computing devices used for implementing the method according to the first aspect;
- Fig. 7: illustrates the basic steps of the method according to the first aspect; and
- Fig. 8: illustrates the configuration of a neuron of a trainable algorithm which can be used in the trainable algorithm employed by the method according to the first aspect.

### DESCRIPTION OF EMBODIMENTS

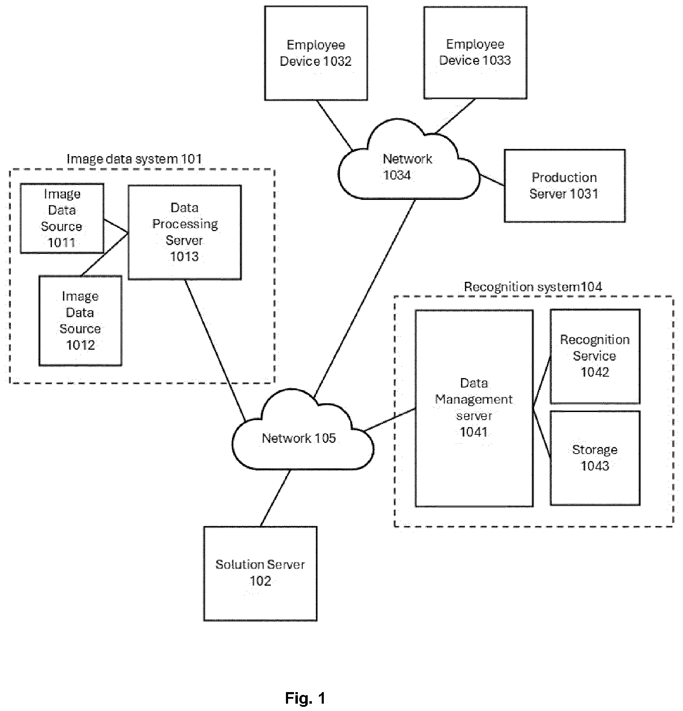

The system described in Fig. 1 comprises image data system 101, solution server 102, production server 1031, recognition system 104, and network 105. Optionally, the system comprises the employee's devices 1032, 1033 and network 1034. The image data system 101 comprises image data sources 1011, 1012 and data processing server 1013. The image data sources 1011, 1012 are conveniently listed as two, but for example there are three or more. It is preferable for image data sources 1011, 1012 to be positioned in a way that allows for capturing image data of an object or objects from multiple angles. For example, if the image data sources are cameras, these cameras are for example installed at gates where the objects pass through. The image data sources 1011 and 1012 for example include examples such as regular cameras, wide-angle cameras, infrared cameras, LiDAR sensors, drone footage, image files, video files, medical images, microscope images, as well as satellite images. There are for example multiple image data sources 1011, 1012, each of which is for example of a different type or the same type. A piece of image data is for example the output from any of the aforementioned image data sources. For example, it is an image, a video frame, or data from a sensor. If the image data sources 1011, 1012 are some types of cameras and the objects to be imaged are fresh products or pharmaceuticals, then the camera must meet certain standards. For example, the camera could be one that has received certification from the FDA (Food & Drug Administration). The object can be anything, and for example is a physical and/or corporeal and/or tangible object such as a good (for example a perishable good), a pharmaceutical, or cargo for transportation. The data processing server 1013 performs preprocessing on the image data. The data processing server 1013 for example controls the capturing of objects when the image data sources 1011, 1012 are cameras. The data processing server 1013 for example performs processing to mask representations of human faces in the image data digitally. Sometimes, the faces of people may accidentally be captured because the data processing server 1013 control the capturing of the objects automatically. In such case, data processing server 1013 digitally mask the faces with recognising the faces. The masking is performed at least before the image data is sent to the recognition system 104, as described later. However, it is for example not performed by data processing server 1013 and for example instead is performed on the solution server 102. The data processing server for example associates image data obtained from multiple image data sources 1011, 1012 capturing the same object. For example, the data processing server for example manages this by assigning a unique identifier, referred to as a first identifier, to each piece of image data, for example to pieces of the image data acquired from different ones of the image data sources 1011, 1012. This first identifier could take the form of a tag, mark, label, unique core, reference number, or metadata descriptor, ensuring that all image data from different image data sources 1011, 1012 is consistently recognised as related to the same object. The data processing server 1013 is conveniently referred to as a single server, but it for example comprises multiple computing devices. The data processing server 1013 is for example located in the facility where the objects are physically stored.

The production server 1031 before example is the server that manages information about the objects. The production server 1031 manages which object corresponds to each unique identifier, referred to as a second identifier by linking the "order in which they should be captured" with the second identifier. For example, if there is a rule that image data should be captured in the order they are lined up, it operates under the assumption that the solution server 102, mentioned later, will query the second identifiers in the order. Based on this premise, second identifiers are assigned in that order to associate each object with its respective identifiers. This second identifier could take the form of a tag, mark, label, unique core, reference number, or metadata descriptor. The second identifier does not need to be created by the production server 1031 but can initially be sent from the solution server 102. For example, the second identifier is something that is shared between the solution server 102 and the production server 1031. For example, the second identifier is used as the first identifier. In other words, the second identifier and the first identifier are for example the same. For example, the second identifier can be sent in advance from the production server 1031 to the data processing server 1013 via the solution server 102, allowing it to be used as the first identifier. The overall picture of data linkage will be described later. The production server 1031 for example communicates with the employee of the facility via their employee's devices 1032, 1033. For example, the production server 1031 sends the notifications or alerts related to a specified object or a facility to the employee's devices 1032, 1033. The production server 1031 is for example located at the company that manages the facility for the objects. The notification and alert related to the specified object are for example each sent to at least one different employee's device, either as an app notification, via email, or through other methods. Similarly, the notification and alert related to the facility is for example also sent to at least one different employee, using any of these methods. The notification before example is an instruction related to the transportation object. The instruction for example differs based on the classification of the object. The classification is described later. The notification may be sent from the solution server 102 as described later. The production server 1031 for example has a user interface to receive the operations input from employees. The production server 1031 for example communicates with the solution server 102, as described later, via the network 105. The production server 1031 is conveniently referred to as a single server, but it for example comprises multiple computing devices. The employee's devices 1032, 1033 for example receives user input indicating that the specified step is finished.

The recognition system 104 comprises data management server 1041, recognition service (also called recognition module) 1042, and storage 1043. The recognition system 104 for example resides in the cloud. The data management server 1041 acts as an interface for the recognition system 104. The data management server 1041 receives the plural pieces of image data from solution server 102, as described later and sends them to the recognition service 1042. The data management server 1041 for example causes the data to be stored in the storage 1043. Additionally, the data management server 1041 for example controls the access to allow employees of the company managing the facility to access the storage while preventing others, such as employees of the company managing the solution server 102, from accessing it. For example, the managing server for example controls access using the identifications of employee's devices 1032, 1033. The recognition service 1042 is a trainable, for example trained, algorithm (such as an artificial intelligence algorithm, for example a learning algorithm such as a machine learning algorithm, specifically a convolutional neural network) which has been pre-trained, i.e. trained, with training data, is configured to classify the received image data and determines the classification data at a confidence level. The recognition service 1042 for example sends the error information on the image. When there are multiple pieces of image data related to the same object, each piece of image data is for example sent to a single recognition service 1042 or to each a different recognition service. When each piece of image data is sent to each a different recognition service, each recognition service before example is or has been trained with different training data. For example, if each image data is captured by cameras positioned at various different locations, each set of training data for example includes images that maintain a consistent spatial relationship between the camera position and the object. When each of the plural image data sources 1011, 1012 is distinct, the data management server 1041 sends each piece of image data to different recognition services 1042, with each recognition service corresponding to each image data source 1011, 1012. For example, when the image data sources 1011, 1012 are a camera and LiDAR, each corresponding recognition service 1041 for receiving data from distinct image data sources is or has been trained with its respective training data. The storage 1043 store the image data. The image data stored in the storage is, for example, automatically deleted after a predetermined period.

The solution server 102 for example communicates with the data processing server 1031, the production server 1031, and the recognition system 104, via the network 105. The solution server 102 is conveniently referred to as a single server, but in an example it comprises multiple computing devices. For example, the solution server 102 resides in the cloud. For example, the solution server 102 communicates with the image data system 101. The solution server 102 for example retrieves the image data from the data processing server 1013. The solution server 102 is for example accessed from the production server 1031 via the network 105. For example, it is possible to access the solution server 102 from employee's devices 1032, 1033. For example, the solution server 102 provides a web user interface to the production server 1031 and/or employee's devices 1032, 1033 to access the solution server itself and/or other servers. The solution server for example receives the second identifier of the relation objects and the pieces of image data from the production server 1031. This second identifier could take the form of a tag, mark, label, unique core, reference number, or metadata descriptor. The second identifier does not need to be obtained from the production server 1031 but is for example initially sent from the solution server 102. For example, the second identifier is something that is shared between the solution server 102 and the production server 1031.

The solution server 102 sends the pieces of image data to the recognition system 104. For example, the solution server 102 sends the association data to the recognition system 104. Afterwards, the solution server 102 receives the classification results from the recognition system 104, which for example includes the classification data, error information related images of the object, and the confidence levels of the classifications. The classification data itself may indicate the destination of the object. Additionally, the classification data may also be other information that can be matched with the destination of the item. The solution server 102 integrates the results related to the same object and triggers workflows. Here, 'integrate' refers to deciding which result to adopt when multiple image data are sent to the recognition system 104 and the results returned based on each image differ, or to assessing continuity with historical results, among other actions. Moreover, the integration by the solution server 102 itself is not mandatory. For example, even if multiple image data are sent, integration might not be necessary if the results are identical. Similarly, when multiple image data and association data are sent, integration may not be required if the recognition system 104 is trained to produce a single result based on the association data. Examples of 'integrate' or 'integration' will be described later. The workflows themselves are for example performed on the solution server 102, the product server 1031, the employee's devices 1032, 1033, the recognition system 104 and/or the image data system 101. Depending on the results, a single workflow is for example triggered, or multiple workflows are for example triggered. The multiple pieces of image data are related to the same object, and the solution server 102 sends each data to the recognition system 104 and receives multiple results based on each image data from the recognition system 104. In this case, the solution server 102 integrates the results using the first identifier and/or the second identifier. For example, when one result including error information and other results do not, the integration determines that there is a defect in a specific location of the object, so the solution server 102 triggers the corresponding workflow. As another example, when the classification data included one result differs from the classification data included in another result, as a result of the integration, the solution server 102 for example adopts the result with the greater confidence level. When the classification results differ and there are three or more pieces of data, the solution server 102 for example uses a majority voting method for integration or a weighted majority voting method based on confidence level, as a means of integration. If the integrated confidence level is equal to or greater than the first threshold, the transportation workflow is for example triggered. The integrated confidence level is for example the maximum value among the confidence levels included in multiple results, the average value, or the weighted average value. Additionally, the solution server 102 performs integration related to historical results. For example, if the error information continues to appear in the results from the recognition service 1042, the solution server 102 triggers the corresponding workflow assuming there is an irregularity in the data source or facility. The information related to the irregularity is for example sent to the production server 1031, and/or to employee's devices 1032, 1033. For example, the solution server 102 triggers the automated on-going training of the recognition service 1042. For example, if the confidence level of individual results is equal to or greater than the second threshold, which is sufficiently larger than the first threshold, the solution server 102 triggers the auto-on-going training workflow using the individual results as the ground truth. Just by using this system, it automatically learns from high-confidence data, so its decision-making accuracy improves over time. The solution server 102 for example instructs that the image data store in the storage 1043. After storing the image data to the storage 1043, the solution server 102 for example causes any temporary image data to be deleted from the server. If the data processing server 1013 still stores the temporary image data, the solution server 102 for example instructs the data processing server 1013 to delete it.

### Flowchart

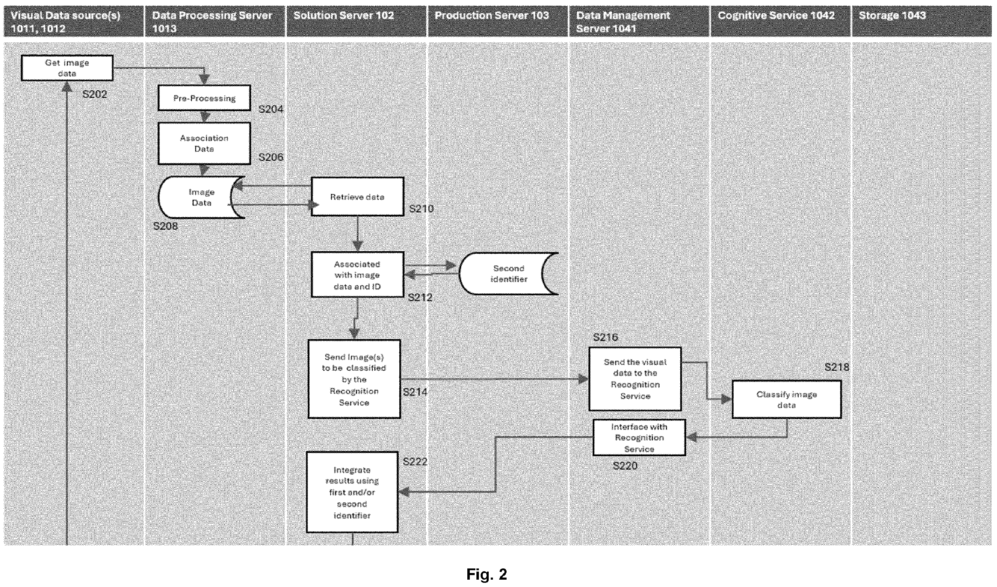

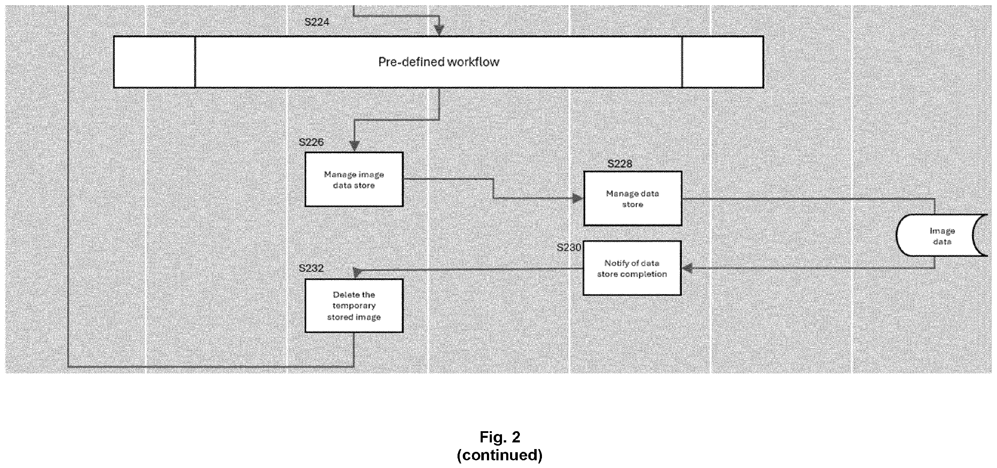

Fig. 2 is an example of a flowchart that explains the overall process. In step S202, the data processing server controls the image data sources 1011, 1012 to get, i.e. retrieve, multiple pieces of image data of the object. In step S204, the data processing server 1013 performs pre-processing on the image data. For example, the data processing server 1013 perform processing to digitally mask representations of faces. In step S206, the data processing server 1013 associates the image data obtained from multiple image data sources1011, 1012 capturing the same object by using the first identifier. In step S208, the data processing server 1013 temporarily stores the image data. The image data is for example stored on the data processing server or in any other secure storage. In step S210, the solution server 102 retrieves the image data from the data processing server 1013. In step S212, the solution server 102 associates the image data with the second identifier. For example, if the solution server102 needs a new second identifier, the solution server 102 retrieves the second identifier from the production server 1031. As mentioned above, the production server 1031 associates each object with its second identifier. In step S214, the solution server 102 sends the image data to the management server 1041 to be classified by the recognition service 1042. In step S216, the management server 1041 sends the image data to the recognition service 1042. In step S218, the recognition service 1042 classifies the received piece of image data and sends results which includes classification data at a confidence level. The results include the error information on the image when there is the error information. For example, the results include the classification data, error information related object images, and the confidence levels of the classifications. In step S220, the management server 1041 sends the results to the solution server 102. In step S222, the solution server 102 integrates the results from the cognitive server 1041 with using first identifier and/or the second, as mentioned above. In step S224, one or more workflows are triggered according to the results. The details of workflows are described later. In step S226, the solution server 102 instructs the image data stored in the storage 1043. In step S228, the management server 1041 stores the image data in the storage 1043. In step S230, the management server sends notification of data store completion to the solution server 102. In step S232, the solution server 102 deletes the image data from the server. If the data processing server 1013 still stores the temporary data, the data is for example deleted in this step.

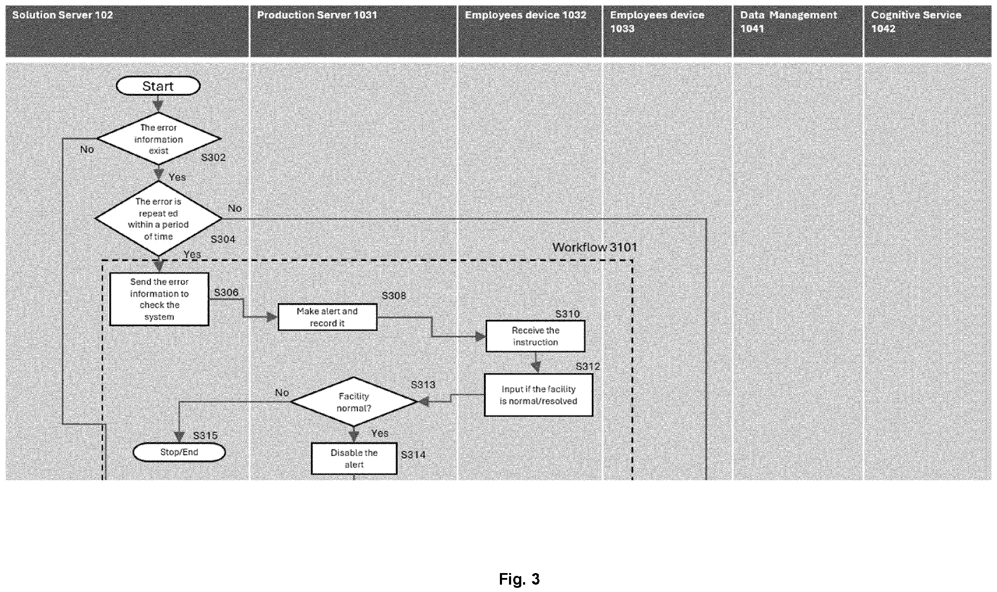

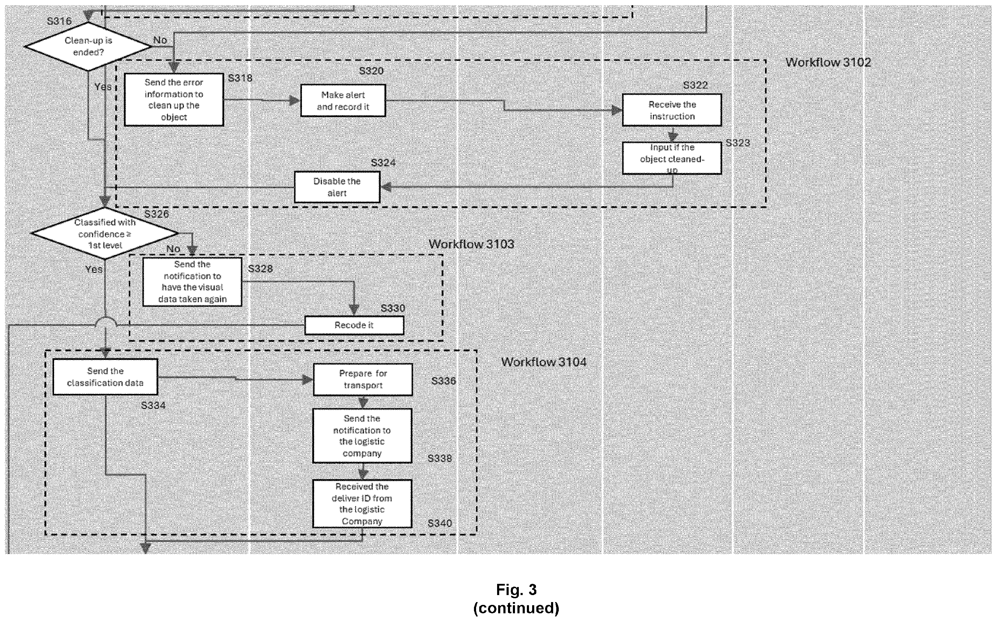

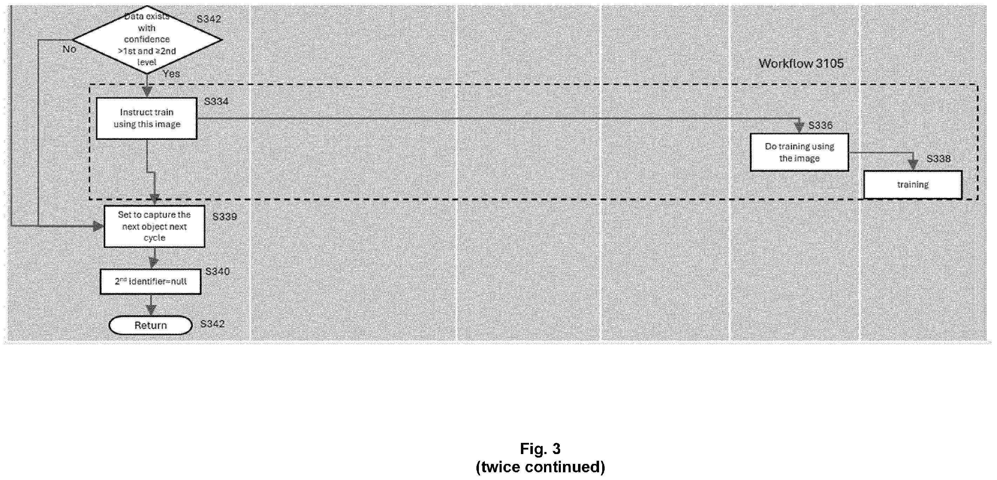

Fig. 3 is an example of a flowchart that explains the workflow in Fig. 2. As mentioned above, the solution server 102 causes the triggering of a workflow with using data including results from the recognition system 104. As mentioned above, multiple results are integrated using the first and/or second identifier. In step S302, the solution server 102 analyses whether the error information exists in integrated data. If yes and the error is repeated within a period of time (S304: Yes), workflow 3101 is triggered. If yes and error is not repeated (S304: No), workflow 3102 is triggered. After executing workflow S3101, only the system is fixed (S316: No), the workflow 3102 is triggered. Step S316 is described later. If the error does not exist (S302: No) and the integrated confidence level is less than the first threshold (S326: No), workflow 3103 is triggered. If the integrated confidence level is equal to or greater than the first threshold (S326: Yes), workflow 3104 is triggered. If the integrated confidence level is less than the first threshold (S326: No), the solution server 102 notifies the production server 1031 that this item could not be classified, causes the production server to log that this object cannot be classified (S330), and then the workflow terminates and return to step S226 in the overall flow illustrated in Fig. 2. For example, the solution server 102 logs that the object cannot be classified. If at least one confidence level of data, which is not integrated classification level, equal to or greater than the second thresh hold, which is sufficiently larger than the first threshold (step S342: Yes), workflow 3105 is triggered. In the step S339 and S340, the following object is captured and set the second identifier within the solution server 102 to Null, then return to step S226 in the overall flow illustrated in Fig. 2.

In this section, each triggered workflow is described.

The workflow 3101 is an example related to fixing the facility problem. Here, a facility problem is described as something that includes a problem of image data sources 1011,1012. When this workflow is triggered, the server 102 notify the error information to the production server 1031 (S306). The production server 1031 makes the alert and records it (S307). The production server 1013 for example stops the product line for checking. The production server 1031 notifies the employee who is in charge of the product line via the employee's device 1032. This notification is for example carried out by solution server 102. After checking, the employee inputs information describing that the facility is normal or information that the problem has been resolved via the employee's device 1032 (S312). The employee for example input information describing that the object is clean or information describing that the object is not clean. This is because there are cases in which the employee who checked the facility also cleans the object. This input may be done from the production server 1031. Using the web user interface of the solution server 102, the solution server 102 for example receives information describing the employee's device 1032. In this case, information is shared with the production server 1031. If the facility is normal, the solution server 1031 disables, i.e. cancels, the alert (S313: Yes, and S314). If no the facility is not normal (S313: No), the solution server 102 stops and ends the operation of the flows, including the main flow (S315). If the facility is normal, the solution server 102 check whether the object has been cleaned (S316). As mentioned above, there are cases where the employee who checks the facility also cleans the object. In such case, the employee for example inputs into step S323 information describing that he has cleaned the object. Therefore, the solution server 102 has checked whether the input provided. If no input is provided (S316: No), the workflow 3102 is triggered.

The workflow 3102 is an example related to cleaning-up the object. In this case, since the error does not repeat, it is assumed that the surface of the object is temporarily dirty. When this workflow is triggered, the server 102 notifies the error information to the production server 1031 (S318). The production server 1031 makes the alert and records it (S320). The production server 1013 for example stops the product line for cleaning-up the object. The production server 1031 notifies the employee who is in charge of the cleaning-up via the employee's device 1033. This notification is for example carried out by the solution server 102. After cleaning-up, the employee inputs via the employee's device 1033 information describing that the object is, i.e. has been, cleaned-up (S323). This input is for example done from the production server 1031. Using the web user interface of the solution server 102, the solution server 102 for example receives information describing the employee's device 1033. In this case, information is for example shared with the production server 1031. After the object is, i.e. has been, cleaned, the solution server 1031 disables, i.e. cancels, the alert (S324).

The workflow 3103 is an example related to processing classification failures. In this embodiment, the solution server 102 send the notification to have the image data sent again to the production server 1031 (S328). The production server 1031 records it. After the production server 1031 records it, the workflow will terminate and return to step S226 in the overall flow illustrated in Fig. 2. The solution server 102 for example logs that the object cannot be classified.

The workflow 3104 is an example related to processing the destination of an object, triggered by the classification achieved in Step S326. In this example, instructions are for example sent to the production server 1031 to sort objects according to their classification. For instance, the production server 1031 for example instructs employees or automatically transports, for example determines control data for automatically controlling a transport device for transporting the object to transport, items, for example the classified object, to designated locations based on their classification. Automatic transportation can be carried out using conveyor lines or automated guided vehicles. Next, the production server 1031 for example issues a notification to another company responsible for further transportation, instructing them to proceed. Additionally, if an ID related to the delivery is received from the other company, the production server 1031 is for example linked to the item and recorded.

The workflow 3105 is an example related to auto-training the recognition service 1042. If the confidence level of individual results is greater than the second threshold, which is sufficiently larger than the first threshold (S342: Yes), the solution server 102 for example triggers the auto-on-going training workflow using the individual results as the ground truth. The solution server 102 for example sends the instruction and the image data which confidence level is equal to or greater than the second threshold to the data management server 1041 (S344). The data management server for example executes the training to the recognition service 1042 using the image data as the ground truth (S346). Just by using this system, it automatically learns from high-confidence data, so its decision-making accuracy improves over time.

In this way, by linking the image data obtained from multiple image data sources and allowing each to be individually classified by a recognition service, and then integrating the results again for evaluation, it is possible to accurately determine the classification of items. Additionally, as an added benefit, information on dirt and facility abnormalities can also be appropriately assessed. Furthermore, by automatically retraining based on the results of individual recognition services, the classification of objects can be carried out with even greater accuracy.

### Another example

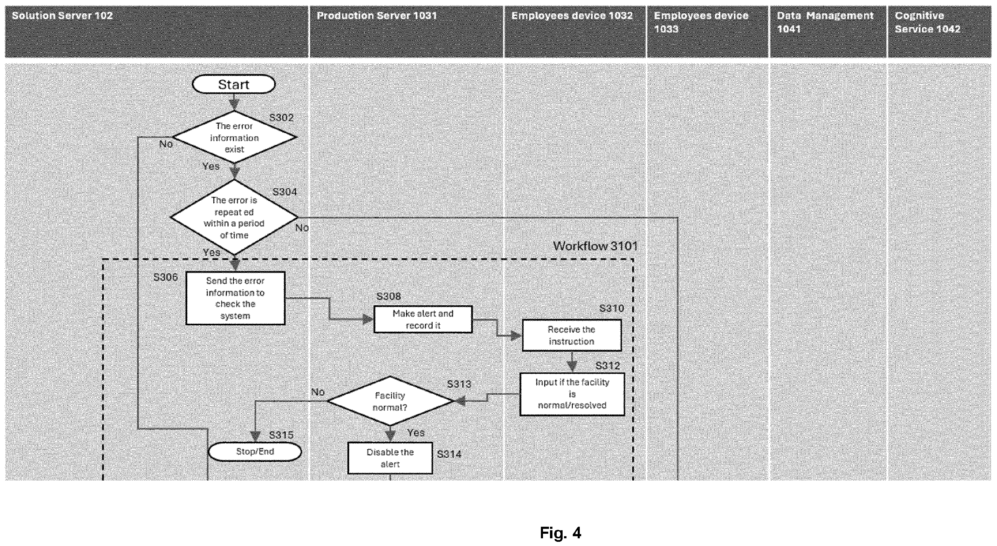

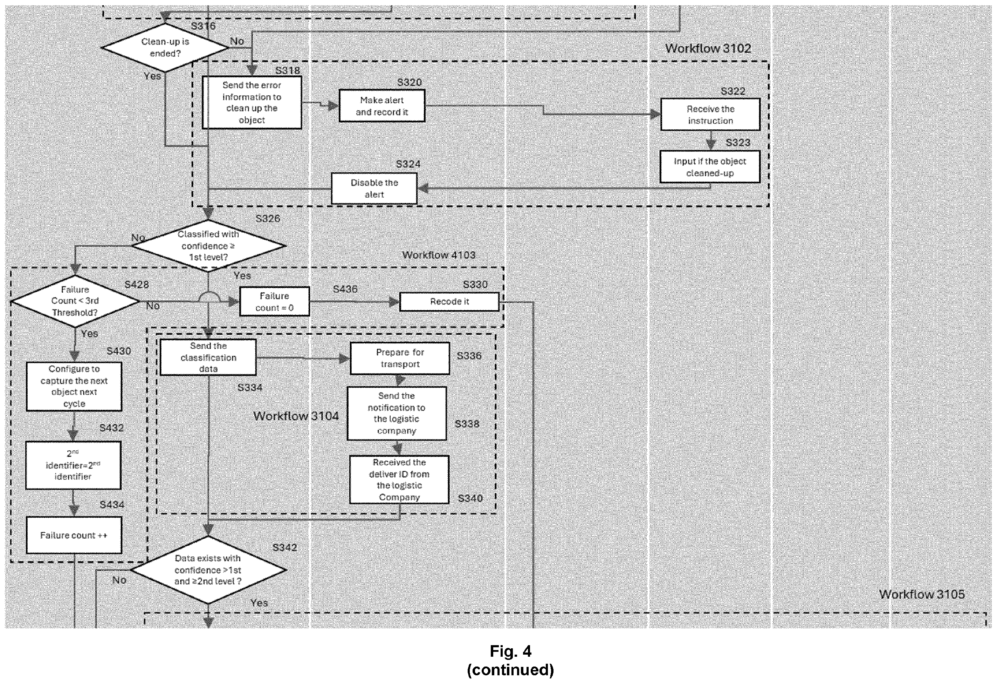

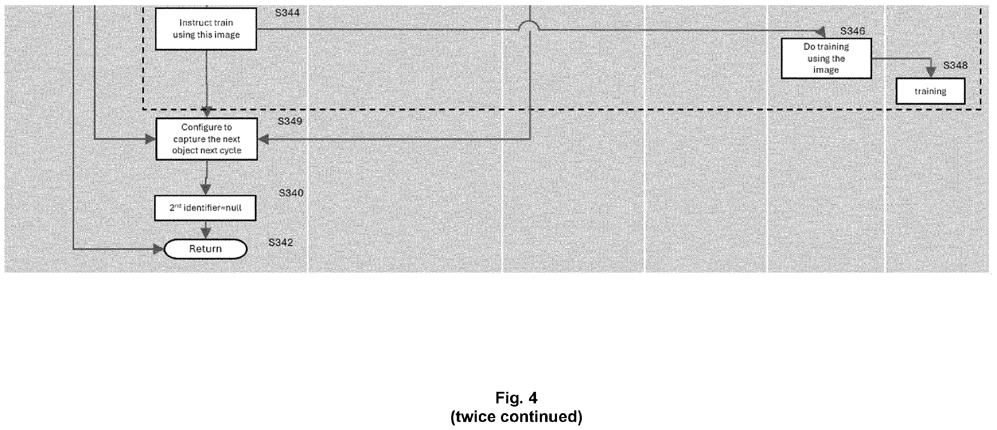

Fig. 4 is a diagram illustrating a different embodiment that modifies a part of Fig. 3. The same reference numerals are used for the same parts, and only the differences compared to Fig. 3 are explained. Fig. 4 differs from Fig. 3 in workflow 4103. The workflow 4103 is an example related to processing classification failure. In this embodiment, when the integrated confidence level the is less than the first threshold, and the number of times classification failed does not exceed the third threshold (step S428: Yes), the solution server 102 obtains pieces of image data of the same object in the next cycle, identical to this cycle (step S430). Next the solution server 102 keeps the second identifier (step S432). This step was written for clarity, and it would be sufficient to simply not perform step S340. The solution server 102 increments the count of failures (step S434). When the number of times fail is equal to or greater than the third threshold (step S428: No), the solution server 102 resets the failure count and for example informs the production server 1031 that this object cannot be classified (step S330). The solution server 102 for example logs that the object cannot be classified in themselves.

This allows for the automatic repetition of processing based on the integrated results, enabling the acquisition of more accurate data for classification.

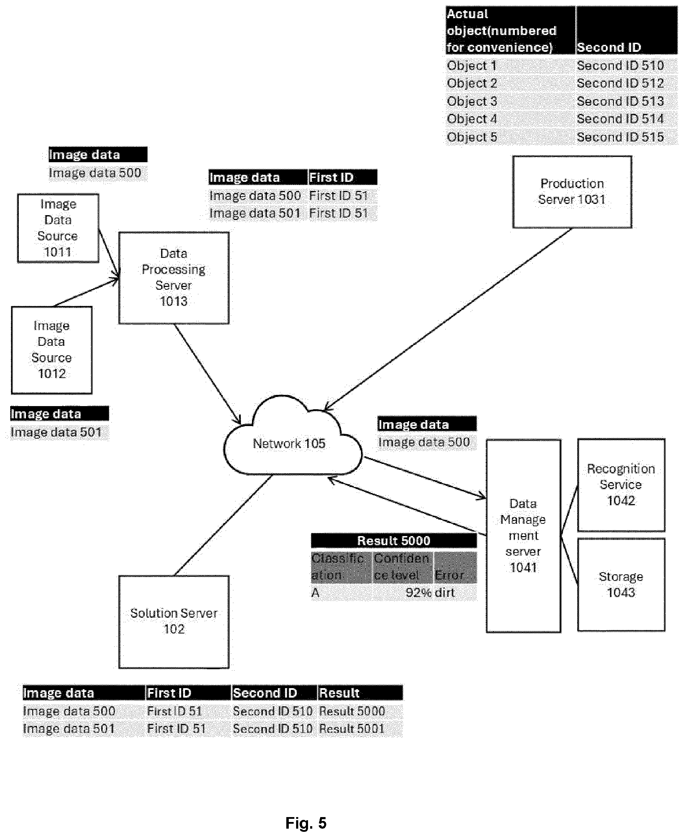

Fig. 5 is a diagram that explains an example of data linkage. As shown in Fig. 5, image data from each image data source 1011, 1012 is sent to the data processing server 1013. For example, the image data sources 1011 sends a piece of image data 500 and the image data source 1012 sends a piece of image data 501. The data processing server 1013 assigns the same first identifier to these two pieces of image data 500 and 501, because they are captured of the same object. In next step, the solution server 102 retrieve the data set that includes the pieces of image data 500, 501 and the first identifier 51. The production server 1031 holds the association between the actual object and the second identifier. The solution server 102 retrieves the second identifier 500 and link the data set as mentioned above. As mentioned above, the second identifier is for example used as the first identifier. In the next step, the solution server 102 sends each piece of image data to the recognition service 1042. The recognition service 1042 returns each result. The result including the classification data, and the confidence level as mentioned above. The results for example includes the error information. Since multiple pieces of image data are sent to the recognition service, multiple results come back one by one. At this point, the results are separate, but the multiple results can be linked together using the name of each piece of image data and the first identifier and/or the second identifier. In this way, the server can integrate multiple results and associate them with the object.

### Other use cases

The above examples primarily describe classifying objects such as fresh produce, but this system can also be used for other purposes. For example, the present disclosure is applied to systems that automatically classify and transport an object such as a packet to their delivery or storage destinations. In such case, by associating image data captured from multiple angles of a single package and integrating the results from sending each piece of data to a recognition service, it is possible to consolidate the information written on the package and determine its delivery or storage destination. For example, if one piece of image data contains part of a reference number, another contains part of a barcode, and yet another contains the word 'corrosive,' the system can infer the reference number and classify the packet to be delivered to a location designated for corrosive items. The delivery destination can be adjusted based on words like 'hazardous' or 'explosive.'

### Hardware configuration

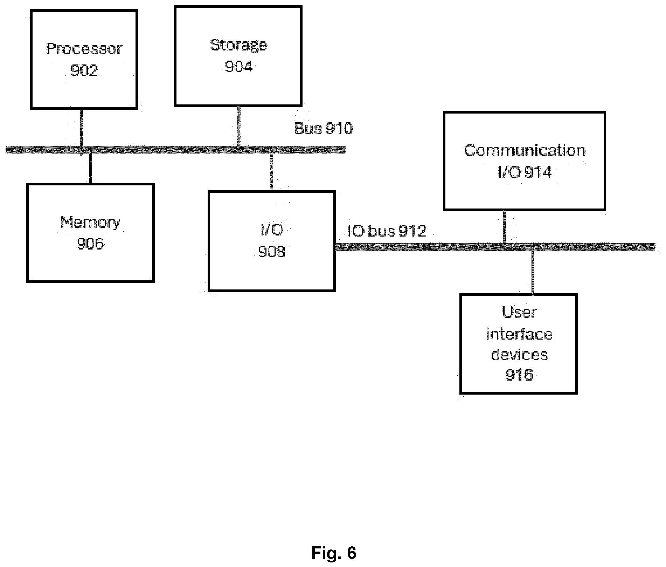

Fig. 6 is an example of the hardware configuration that constitutes each of the computing devices. A server is one example of a computing device. A processor 902, storage 904, memory 906 and I/O (input/output) 908 are communicated with bus 910. Storage 904 stores the program code, a memory 906 is used as a working memory (i.e. random access memory) of processor 902. The program code including the instruction relating to the invention. The processor 902 executes processes using the memory 908 based on the program code. The I/O 908 is connected to an I/O bus 912, through which the processor connects to a communication I/O 914 for other servers or image data sources 1011,1012 as shown in Fig. 1, and to user interfaces 916 such as a mouse, keyboard, touch panel, and display. While this example describes communication using a bus type, it also is for example be configured with connections using a channel instead of a bus type. The operation of the flowchart described in this specification is for example carried out by one or more processors, in accordance with program code instructions stored in the storage of multiple computing devices.

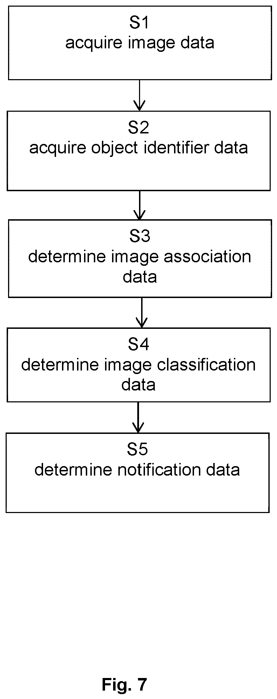

Fig. 7 illustrates the basic steps of the method according to the first aspect, in which step S1 encompasses acquisition of the image data, step S2 encompasses acquisition of the image identifier data and subsequent step S3 encompasses determination of the image association data. Then, step S4 determines the image classification data, and step 5 determines the notification data.

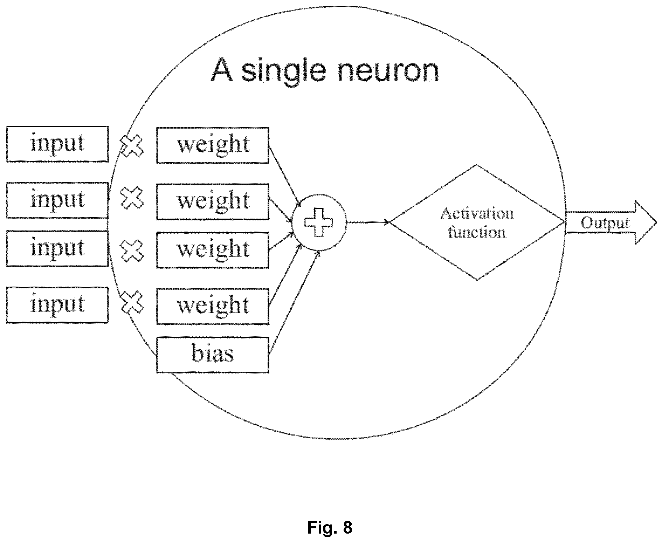

In the following, an explanation of convolutional neural networks as an example of the trainable algorithm to be used with the disclosed invention is provided with reference to Fig. 8.

Convolutional networks, also known as convolutional neural networks, or CNNs, are an example of neural networks for processing data that has a known grid-like topology. Examples include time-series data, which can be thought of as a 1-D grid taking samples at regular time intervals, and image data, which can be thought of as a 2-D or 3-D grid of pixels. The name "convolutional neural network" indicates that the network employs the mathematical operation of convolution. Convolution is a linear operation. Convolutional networks are simply neural networks that use convolution in place of general matrix multiplication in at least one of their layers. There are several variants on the convolution function that are widely used in practice for neural networks. In general, the operation used in a convolutional neural network does not correspond precisely to the definition of convolution as used in other fields, such as engineering or pure mathematics.

The main component of convolutional neural networks are artificial neurons. Fig. 8 is an example of a single neuron depicted. The node in the middle represents a neuron, which takes all inputs (x₁, ..., xₙ) and multiplies them with their specific weights (w₁, ..., wₙ). The importance of the input depends on the value of its weight. The addition of these computed values is called weighted sum which will be inserted into an activation function. The weighted sum z is defined as: $z = {\sum }_{i = 0}^{n} {x}_{i} ⋅ {w}_{i}$

The bias b is an input-independent value which modifies the boundaries of the threshold. The resulting value is processed by an activation function which decides whether the input will be transferred to the next neuron.

A CNN usually takes an order 1 or 3 tensor as its input, e.g., an image with H rows, W columns, and 3 channels (R, G, B colour channels). Higher order tensor inputs, however, can be handled by CNN in a similar fashion. The input then sequentially goes through a series of processing. One processing step is usually called a layer, which could be a convolution layer, a pooling layer, a normalization layer, a fully connected layer, a loss layer, etc. Details of the layers are described in the sections below. ${x}^{1} \to {w}^{1} \to {x}^{2} \to ⋯ \to {x}^{L - 1} \to {w}^{L - 1} \to {x}^{L} \to {w}^{L} \to z$

The above equation 2 illustrates how a CNN runs layer by layer in a forward pass. The input is x¹, usually an image (order 1 or 3 tensor). We note the parameters involved in the processing of the first layer collectively as a tensor wⁱ. The output of the first layer is x², which also acts as the input to the second layer processing. This processing proceeds until processing of all layers in the CNN has been finished, which outputs x^{L}.

One additional layer, however, is added for backward error propagation, a method that leans good parameter values in the CNN. Suppose the problem at hand is an image classification problem with C classes. A commonly used strategy is to output x^{L} as a C-dimensional vector, the i-th entry of which encodes the prediction (posterior probability that x¹ comes from the i-th class). To make x^{L} a probability mass function, we can set the processing in the (L - 1)-th layer as a softmax transformation of x^{L-1}. In other applications, the output x^{L} may have other forms and interpretations. The last layer is a loss layer. Let us suppose t is the corresponding target (ground-truth) value for the input x¹, then a cost or loss function can be used to measure the discrepancy between the CNN prediction x^{L} and the target t. Note that some layers may not have any parameters, that is, wⁱ may be empty for some i.

In an example of a CNN, ReLu is used as an activation function for the convolutional layers and the softmax activation function provides information in order to give an classification output. The following sections will explain the purpose of the most important layers.

An input image is input to a feature learning section of a layer comprising convolution and ReLu, followed by a layer comprising pooling, which is followed by further pairwise repetitions of layers of convolution and ReLu and of pooling. The output of the feature learning section is input to a classification section which comprises layers directed to flattening, fully connecting and softmaxing.

In a convolutional layer, multiple convolution kernels are usually used. Assuming D kernels are used and each kernel is of spatial span H x W, we denote all the kernels as f. f is an order 4 tensor in ${ℝ}^{H \times W \times {D}^{l} \times D}$. Similarly, we use index variables 0 ≤ i < H, 0 ≤ j < W, 0 ≤ d^{l} < D^{l} and 0 ≤ d < D to pinpoint a specific element in the kernels. Also note that the set of kernels f refers to the same object as the notation w^{L} above. We change the notation a bit to simplify the derivation. It is also clear that even if the mini-batch strategy is used, the kernels remain unchanged.

The spatial extent of the output is smaller than that of the input so long as the convolution kernel is larger than 1 x 1. Sometimes we need the input and output images to have the same height and width, and a simple padding trick can be used For every channel of the input, if we pad (i.e., insert) $\left⌊\frac{H - 1}{2}\right⌋$ rows above the first row and $\left⌊\frac{H}{2}\right⌋$ rows below the last row, and paid $\left⌊\frac{W - 1}{2}\right⌋$ columns the left of the first column and $\left⌊\frac{W}{2}\right⌋$ columns to the right of the last column of the input, the convolution output will be H^{l} × W × D in size, i.e. having the same spatial extent as the input. $\left⌊∗\right⌋$ is the floor function. Elements of the padded rows and columns are usually set to 0, but other values are also possible.

Stride is another important concept in convolution. A kernel is convolved with the input at every possible spatial location, which corresponds to the stride s = 1. However, if s > 1, every movement of the kernel skip s - 1 pixel locations (i.e., the convolution is performed once every s pixel both horizontally and vertically).

In this section, we consider the simple case when the stride is 1 and no padding is used. Hence, we have y (or *x*^{*l*+1}) in ${ℝ}^{{H}^{l + 1} \times {W}^{l + 1} \times {D}^{l + 1}}$, with *H*^{*l*+1} *= H^{l} - H +* 1, *W*^{*l*+1} *= W^{l} - W* + 1, and *D*^{*l*+1} = *D.* In precise mathematics, the convolution procedure can be expressed as an equation: ${y}_{{i}^{l + 1} , {j}^{l + 1} , d} = {\sum }_{i = 0}^{H} {\sum }_{j = 0}^{W} {\sum }_{{d}^{l} = 0}^{{D}^{l}} {f}_{i , j , {d}^{l} , d} \times {x}_{{i}^{l + 1} + i , {j}^{l + 1} + j , {d}^{l}}^{l}$

Equation 3 is repeated for all 0 ≤ *d* ≤ *D* = *D*^{*l*+1}, and for any spatial location (*i*^{*l*+1}, j^{*l+*1}) satisfying 0 ≤ *i*^{*l*+1} < H^{l} - H+1=H^{l+1}, 0 ≤ *j^{l+1}* < W - W + 1=W^{l+1}. In this equation, ${x}_{{i}^{l + 1} + i , {j}^{l + 1} + j , {d}^{l}}^{l}$ refers to the element of x^{l} indexed by the triplet (*i^{l+1}+i,j^{l+1}+j,d^{l}).* A bias term b_{d} is usually added to *y_{i^{l+1},j^{l+1},d}*. We omit this term in this note for clearer presentation.

A pooling function replaces the output of the net at a certain location with a summary statistic of the nearby outputs. For example, a max pooling operation reports the maximum output within a rectangular neighbourhood of a table. Other popular pooling functions include the average of a rectangular neighbourhood, the L₂ norm of a rectangular neighbourhood, or a weighted average based on the distance from the central pixel. In all cases, pooling helps to make the representation approximately invariant to small translations of the input. Invariance to translation means that if we translate the input by a small amount, the values of the pooled outputs do not change.

Because pooling summarizes the responses over a whole neighbourhood, it is possible to use fewer pooling units than detector units, by reporting summary statistics for pooling regions spaced k pixels apart rather than one pixel apart. This improves the computational efficiency of the network because the next layer has roughly k times fewer inputs to process.

Suppose all the parameters of a CNN model w¹, ..., w^{L-1} have been learned, then we are ready to use this model for prediction. Prediction only involves running the CNN model forward, i.e., in the direction of the arrows in equation 1. Take the image classification problem as an example. Starting from the input x¹, we make it pass the processing of the first layer (the box with parameters w¹), and get x². In turn, x² is passed into the second layer, etc. Finally, we receive ${x}^{l} ∈ {ℝ}^{C}$, which estimates the posterior probabilities of x¹ belonging to the C categories. We can output the CNN prediction as: ${arg}_{i} max {x}_{i}^{L}$

Now, the problem is: how do we learn the model parameters?

As in many other learning systems, the parameters of a CNN model are optimized to minimize the loss z, i.e. we want the prediction of a CNN model to match the ground-truth labels. Suppose one training example x¹ is given for training such parameters. The training process involves running the CNN network in both directions. We first run the network in the forward pass to get x^{L} to achieve a prediction using the current CNN parameters. Instead of outputting a prediction, we need to compare the prediction with the target t corresponding to x¹, i.e. continue running the forward pass till the last loss layer. Finally, we achieve a loss z. The loss z is then a supervision signal, guiding how the parameters of the model should be modified (updated).

There exist several algorithms for optimizing a loss function and CNNs are not limited to a specific one. An example algorithm is called Stochastic Gradient Descent (SGD).

This means the parameters are updated by using the gradient estimated from a (usually) small subset of training examples. ${w}^{i} ← {w}^{i} - η \frac{δz}{{δw}^{i}}$

In equation 5, the ← - sign implicitly indicates that the parameters wⁱ (of the i-layer) are updated from time t to t + 1. If a time index t is explicitly used, this equation will look like ${\left({w}^{i}\right)}^{t + 1} = {\left({w}^{i}\right)}^{t} - η \frac{δz}{δ {\left({w}^{i}\right)}^{t}}$

In equation 6, the partial derivative $\frac{δ z}{δ {w}^{i}}$ measures the rate of increase of z with respect to the changes in different dimensions of wⁱ. This partial derivative vector is called the gradient in mathematical optimization. Hence, in a small local region around the current value of wⁱ, to move wⁱ in the direction determined by the gradient will increase the objective value z. In order to minimize the loss function, we should update wⁱ along the opposite direction of the gradient. This updating rule is called the gradient descent.

If we move too far in the negative gradient direction, however, the loss function may increase. Hence, in every update we only change the parameters by a small proportion of the negative gradient, controlled by η (the learning rate). η > 0 is usually set to a small number (e.g., η = 0.001). One update based on x¹ will make the loss smaller for this particular training example if the learning rate is not too large. However, it is very possible that it will make the loss of some other training examples become larger. Hence, we need to update the parameters using all training examples. When all training examples have been used to update the parameters, we nay one epoch has been processed. One epoch will in general reduce the average loss on the training set until the learning system overfits the training data. Hence, we can repeat the gradient descent updating epochs and terminate at some point to obtain the CNN parameters (e.g., we can terminate when the average loss on a validation set increases).

The last layer's partial derivatives are easy to compute. Because x^{L} is connected to z directly under the control of parameters w^{L}, it is easy to compute $\frac{δ z}{δ {w}^{L}}$. This step is only needed when w^{L} is not empty. In the same spirit, it is also easy to compute $\frac{δ z}{δ {x}^{L}}$. For example, if the squared L₂ loss is used, we have an empty $\frac{δ z}{δ {w}^{L}}$, and $\frac{δ z}{δ {x}^{L}} = {x}^{L} - t$.

In fact, for every layer, we compute two sets of gradients: the partial derivatives of z with respect to the layer parameters wⁱ, and that layer's input xi. The term $\frac{δ z}{δ {w}^{i}}$, as seen in Equation 4, can be used to update the current (i-th) layer's parameters. The term $\frac{δ z}{δ {x}^{i}}$ can be used to update parameters backwards, e.g., to the (i-1)-th layer. An intuitive explanation is: xⁱ is the output of the (i-1)-th layer and $\frac{δ z}{δ {x}^{i}}$ is how xⁱ should be changed to reduce the loss function. Hence, we could view $\frac{δ z}{δ {x}^{i}}$ as the part of the "error" supervision information propagated from z backward till the current layer, in a layer by layer fashion. Thus, we can continue the back propagation process, and use $\frac{δ z}{δ {x}^{i}}$ to propagate the errors backward to the (i-1)-th layer. This layer-by-layer backward updating procedure makes learning a CNN much easier.

Take the i-th layer as an example. When we update the i-th layer, the back propagation process for the (i+1)-th layer must have been finished. That is, we already computed the terms $\frac{δ z}{δ {w}^{i + 1}}$ and $\frac{δ z}{δ {x}^{i + 1}}$. Both are stored in memory and ready for use. Now our task is to compute $\frac{δ z}{δ {w}^{i}}$ and $\frac{δ z}{δ {x}^{i}}$. Using the chain rule, we have $\frac{\partial z}{\partial \left(vec{\left({w}^{i}\right)}^{T}\right)} = \frac{\partial z}{\partial \left(vec{\left({x}^{i + 1}\right)}^{T}\right)} \frac{\partial vec \left({x}^{i + 1}\right)}{\partial \left(vec{\left({w}^{i}\right)}^{T}\right)} ,$ $\frac{\partial z}{\partial \left(vec{\left.\left({x}^{i}\right)\right)}^{T}\right)} = \frac{\partial z}{\partial \left(vec{\left({x}^{i + 1}\right)}^{T}\right)} \frac{\partial vec \left({x}^{i + 1}\right)}{\partial \left(vec{\left({x}^{i}\right)}^{T}\right)} ,$

Since $\frac{\partial z}{\partial {x}^{i + 1}}$ is already computed and stored in memory, it requires just a matrix reshaping operation (vec) and an additional transpose operation to get $\frac{\partial z}{\partial vec \left({x}^{i + 1}\right)}$, which is the first term in the right hand side (RHS) of both equations. So long as we can compute $\frac{\partial vec \left({x}^{i + 1}\right)}{\partial \left(vec{\left({w}^{i}\right)}^{T}\right)}$ and $\frac{\partial vec \left({x}^{i + 1}\right)}{\partial \left(vec{\left({x}^{i}\right)}^{T}\right)}$, we can easily get what we want (the left hand side of both equations).$\frac{\partial vec \left({x}^{i + 1}\right)}{\partial \left(vec{\left({w}^{i}\right)}^{T}\right)}$ and $\frac{\partial vec \left({x}^{i + 1}\right)}{\partial \left(vec{\left({x}^{i}\right)}^{T}\right)}$ are much easier to compute than directly computing $\frac{\partial z}{\partial \left(vec{\left({w}^{i}\right)}^{T}\right)}$ and $\frac{\partial z}{\partial \left(vec{\left({x}^{i}\right)}^{T}\right)}$, because xⁱ is directly related to xⁱ⁺¹, through a function with parameters wⁱ.

In the context of neural networks, activations serve as transfer functions between the input of a neuron and the output. They define under which conditions the node is activated, i.e. the input values are mapped to the output which, in hidden layers, serves again as one of the inputs to the succeeding neuron. There exists a vast amount of different activation functions with different characteristics.

A loss function quantifies how well an algorithm models the given data. To learn from the data and in order to change the weights of the network, the loss function has to be minimized. Generally, one can make the distinction between a regression loss and classification loss. Classification predicts output from set of finite categorical values (class labels), and regression, on the other hand, deals with prediction a continuous value.

In the following mathematical formulations, the following parameters are defined as:
- n is the number of training examples
- i is the i-th training example in a data set
- yᵢ is the ground truth label for the i-th training example
- ŷᵢ is the prediction for i-th training example

The most common setting for classification problems is cross-entropy loss. It increases as the predicted probability diverges from the actual label. The log of the actual predicted probability is multiplied with the ground truth class. An important aspect of this is that cross entropy loss penalizes heavily the predictions that are confident but wrong. The mathematical formulation can be described as: $CrossEntropyLoss = - \left({y}_{i}log\left({\hat{y}}_{i}\right)+\left(1-{y}_{i}\right)log \left(1-\hat{yι}\right)\right)$

A typical example for a regression loss is the mean square error or L₂ loss. As the name suggests, mean square error is measured as the average of the squared difference between predictions and actual observations. It is only concerned with the average magnitude of error irrespective of their direction. However, due to squaring, predictions which are far away from actual values are penalized heavily in comparison to less deviated predictions. Plus MSE has nice mathematical properties which makes it easier to calculate gradients. Its formulation is as follows: $MSE = \frac{1}{n} ⋅ {\sum }_{i = 1}^{n} {\left({y}_{i}-\hat{{y}_{i}}\right)}^{2}$

The following documents contain information on the functioning of convolutional neural networks:
I. Goodfellow, Y. Bengio, and A. Courville, "Deep learning, chapter convolutional networks." http://www.deeplearningbook.org, 2016.
J. Wu, "Introduction to convolutional neural networks."
https://pdfs.semanticscholar.org/450c/a19932fcef1cabd0442cbf52fec38fb9d1e5.pdf. "Common loss functions in machine learning."
https://towardsdatascience.com/common-loss-functions-in-machine-learning-46af0ffc4d23. Accessed: 2019-08-22.
Alex Krizhevsky, Ilya Sutskever, and Geoffrey E. Hinton, "Imagenet classification with deep convolutional neural networks." http://papers.nips.cc/paper/4824-imagenet-classification -with-deep-convolutional-neural-networks.pdf.
S. Ren, K. He, R. Girshick, and J. Sun, "Faster r-cnn: Towards real-time object detection with region proposal networks." https://arxiv.org/pdf/1506.01497.pdf.
S.-E. Wei, V. Ramakrishna, T. Kanade, and Y. Sheikh, "Convolutional pose machines." https://arxiv.org/pdf/1602.00134.pdf.
Jonathan Long, Evan Shelhamer, and Trevor Darrell, "Fully convolutional networks for semantic segmentation." https://www.cv-foundation.org/openaccess/content_cvpr_2015/papers/Long_Fully_Convolutional_Ne tworks_2015_CVPR_paper.pdf.

The disclosed method receives images from a data collector, e.g. cameras or other sensors, pre-processes the data, forwards it to a computer vision artificial intelligence platform, receives predictions and evaluates the them. The results of such evaluation for example trigger a workflow, a prompt for user interaction, further data processing and manipulation or evoke a re-training of the artificial intelligence platform.

Example applications which are part of the present disclosure include:
- Anomaly detection: Multiple images, videos and sensor data are constantly received by the disclosed method. Different inputs are consolidated and sent to different recognition services in order to be evaluated. The predictions from those different services are received and the output is analysed. In case an anomaly is detected, the disclosed method starts a maintenance task dedicated to the dedicated anomaly. Based upon an image and its prediction, the disclosed method starts a maintenance workflow: an alert is generated and sent to the production line monitor system, advising a possible malfunction in a production machine component. A local production line manager is informed by email that a malfunction has been recognized. A maintenance team is informed and the next maintenance window is automatically scheduled. After maintenance has been conducted, the maintenance team documents the repairs and closes the maintenance alert. The local Production line manager is informed about the conducted work and decides to terminate the workflow or resend it to the maintenance team in case further activities are requested. Once the workflow is terminated, the disclosed method repeats the inspection based on new images and confirms whether or not to repair the production machine.
- Warehouse - incoming pallet control: Incoming pallets are received in the warehouse within a dedicated time range. All pallets must be registered in the warehouse system and when necessary special pallets must be stored and constantly monitored. Special cameras are positioned in the gates of the warehouse to record the images of the pallets. The images are pre-processed, images files are sent to the recognition services and the outcoming text is received and evaluated as follows: From all text received only relevant data, such as barcode data, is selected. The barcode data is sent to a warehouse management system, automatically registering the pallet in the warehouse. If warnings or advises are recognized, i.e. 'dangerous', 'corrosive', 'explosive', etc. the disclosed method starts a workflow. The warehouse management system receives an alert and a warehouse leader receives an email with the picture of the pallet and the recognized warning/advice.

The present invention can be summarized as defined in the following aspects.

### Aspect 1

A system configured for classification of an object, the system comprising:
A plurality of image data sources to take image data of the object;
one or more processors;
one or more memories communicatively coupled to the one or more processors, the one or more memories storing instructions which, when processed by the one or more processors, cause the possessor to
   take the plural pieces of image data from the plurality of image data sources;
   associate the plurality of image data sources with each other;
   associate the plural pieces of image data and the object;
   send the plural pieces of image data to the one or more recognition services;
   perform an integration of results from the recognition services;
   perform a classification of the object using integrated results;
   perform sending the notification for sorting of the object according to the classification.

### Aspect 2

The system according to aspect 1, wherein the instructions further cause the one or more processor to
trigger one or more workflows based on the according to the integrated results, which include the classification of the object and sending the notification for sorting of the object.

### Aspect 3

The system according to aspect 1 or 2, wherein the instructions further cause the one or more processor to
perform a determination of an error of a facility which is stored the object according to the integrated results; and
perform a process to stop a product line for inspection.

### Aspect 4

The system according to claim 1 or 2, wherein the instructions further cause the one or more processor to
perform a determination that the object is dirty according to the integrated results; and
perform a process to stop a product line for clean-up.

### Aspect 5

The system according to any one of aspects1 to 4, wherein the instructions further cause the one or more processor to
transport the object according to the classification.

### Aspect 6

The system according to any one of aspects 1 to 5, wherein the instructions further cause the one or more processor to
perform the classification of the object when a confidence level of the integrated result is greater than or equal to a first threshold.

### Aspect 7

The system according to aspect 6, wherein the instructions further cause the one or more processor to
control taking plural pieces of image data when the confidence level of the integrated result is lower than the first threshold.

### Aspect 8

The system according to at least one of claims 6, wherein the instructions further cause the one or more processor to
automatically control a training of the recognition service using a piece of image data, when a confidence level of said piece of image data is greater than a second threshold, the second threshold is greater than the first threshold.

### Aspect 9

The system according to any one of aspects 1 to 7, wherein the instructions further cause the one or more processor to
send each piece of image data to different recognition services, with each recognition service corresponding to each image data source when each of the plural image data sources is distinct,
wherein the integration is performed using the different recognition services.

### Aspect 10

The system according to any one of aspects 1 to 8, wherein the instructions further cause the one or more processor to
automatically mask a face included in one or more of the pieces of image data before sending it to the one or more recognition services.

The above-described embodiments are illustrative and do not limit the present disclosure. Thus, numerous additional modifications and variations are possible in light of the above teachings. Any one of the above-described operations may be performed in various other ways, for example, in an order different from the one described above.

## Claims

1. A computer-implemented method of determining a transport destination of an object, the method comprising the following steps:
a) image data is acquired (S1) from a plurality of image data sources which describes images of the object taken with different ones of the image data sources;
b) object identifier data is acquired (S2) which describes an identifier of the object to be assigned to pieces of the image data acquired from different ones of the plurality of image data sources;
c) image association data is determined (S3) based on the image data and the object identifier data, wherein the image association data describes an association between the pieces of the image data and the identifier;
d) image classification data is determined (S4) based on the image data, wherein the image classification data is determined by inputting the image data and the image association data into a recognition service trained to classify the images according to the object which the images of the object describe and according to a transport destination of the object which the images of the object describe; and
e) notification data is determined (S5) based on the image classification data, wherein the notification data describes a notification indicating a transport destination to which the object shall be transported.

2. The method according to the preceding claim, comprising
determining workflow data describing a workflow to be triggered, wherein the workflow includes sending the notification indicating the transport destination.

3. The method according to any one of the preceding claims, comprising
determining facility error data describing an error of a facility comprising the transport destination; and
determining, based on the facility error data, production control data describing at least one command for stopping a production line, for example for inspection of the production line.

4. The method according to any one of the preceding claims, wherein
the recognition service is trained to classify the images according to a cleanliness state of the object,
the method comprising:
determining, based on the image classification data, production control data describing at least one command for stopping a production line, for example for clean-up of the production line.

5. The method according to any one of the preceding claims, comprising
determining, based on the image classification data, confidence level data
describing a confidence level of the integrated result; and
acquiring confidence level threshold data describing a first threshold of the confidence level of the integrated result, wherein
the notification data is determined if, for example only if, the confidence level of the integrated result is greater than or equal to a first threshold.

6. The method according to any one of the preceding claims, comprising
determining, based on the image classification data, confidence level data
describing a confidence level of the integrated result; and
acquiring confidence level threshold data describing a first threshold of the confidence level of the integrated result; and
determining imaging control data describing at least one command for controlling the image data sources to take plural pieces of the image data if, for example only if, the confidence level of the integrated result is lower than the first threshold.

7. The method according to any one of the preceding claims, comprising
determining, based on the image classification data, confidence level data
describing a confidence level of the integrated result; and
acquiring confidence level threshold data describing a first threshold of the confidence level of the integrated result; and
determining training control data describing at least one command for using a piece of the image data for training the recognition service if, for example only if, the confidence level of the integrated result is greater than a second threshold being greater than the first threshold.

8. The method according to any one of the preceding claims, wherein the recognition service comprises a plurality of recognition services, for example a plurality of different recognition services, wherein each of the plurality of recognition services is assigned to only one of the image data sources, and wherein the image classification data describes an integration of classifications of images describing the same object received from each of the plurality of recognition services.

9. The method according to any one of the preceding claims, comprising
determining masked image data describing images of the object with a masking of a representation of a human face described by the images of the object, wherein
the image data inputted into the recognition service is the masked image data.

10. A computer program comprising instructions which, when the program is executed by a computer, cause the computer to carry out the method according to any one of the preceding claims.

11. A computer-readable storage medium on which the program according to the preceding claim is stored.

12. A computer comprising at least one processor, wherein the at least one processor is configured to execute the program according to claim 10.

13. A data carrier signal carrying the program according to claim 10.

14. A data stream carrying the program according to claim 10.

15. A system, for example a production line control system, for determining a transport destination of an object, comprising the computer according to claim 12, wherein the computer is server.
